Europäisches Patentamt

European Patent Office

Office européen des brevets

(11) Veröffentlichungsnummer: **0 366 972**

**A2**

## (12) EUROPÄISCHE PATENTANMELDUNG

(21) Anmeldenummer: 89118574.6

(22) Anmeldetag: 06.10.89

(51) Int. Cl.⁵: **A01C 7/04 , A01B 73/04 , A01B 49/06**

(30) Priorität: 31.10.88 DE 3837022

(43) Veröffentlichungstag der Anmeldung:
09.05.90 Patentblatt 90/19

(84) Benannte Vertragsstaaten:
**DE FR IT**

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Scheufler, Bernd, Dr.**
**Am Amazonenwerk 101**
**D-4507 Hasbergen(DE)**
Erfinder: **Kemper, Martin**
**Fontanestrasse 15**
**D-4506 Hagen a. T.W.(DE)**

(54) **Kombinierte landwirtschaftliche Verteilmaschine.**

(57) Kombinierte landwirtschaftliche Verteilmaschine, bestehend aus einer Einzelkornsämaschine mit mehreren nebeneinander angeordneten Sägeräten, welche an einem Querbalken befestigt sind, und einem Düngerstreuer mit mehreren Düngerausbringelementen, wobei der Düngerstreuer einen oder mehrere Vorratsbehälter, welche innerhalb der Transportbreite angeordnet sind, und mehrere innerhalb der Transportbreite und zumindest einem außerhalb der Transportbreite angeordnetes Düngerausbringelement aufweist, wobei die außerhalb der Transportbreite angeordneten Sägeräte und Düngerausbringelemente über eine klappbare Vorrichtung zum Transport und/oder zur Reduzierung der Arbeitsbreite in eine Position innerhalb der Transportbreite gebracht werden können. Um auf einfachste Weise die Arbeitsbreiten der eingangs beschrieben Verteilmaschine reduzieren zu können, ist vorgesehen, daß beim Einklappen der außerhalb der Transportbreite angeordneten Düngerausbringelemente (10) gleichzeitig die Düngerzuführung zu diesen Düngerausbringelementen (10) unterbrochen wird, und daß beim Einklappen der außerhalb der Transportbreite angeordneten Sägeräte (12) der Antrieb dieser Aggregate ebenfalls unterbrochen wird.

FIG. 1

## Kombinierte landwirtschaftliche Verteilmaschine

Die Erfindung betrifft eine kombinierte landwirtschaftliche Verteilmaschine gemäß Oberbegriff des Patentanspruches 1.

Eine derartig kombinierte landwirtschaftliche Verteilmaschine ist bereits durch das deutsche Gebrauchsmuster 87 06 974.1 bekannt. Diese kombinierte Verteilmaschine besteht aus mehreren nebeneinander angeordneten Sägeräten, wobei jeweils vier, sechs oder acht Sägeräte nebeneinander quer zur Fahrtrichtung angeordnet sind und einer Düngerstreueinrichtung mit einem zentralen Düngervorratsbehälter. Die sechs und die achtreihige Einzelkornsämaschine ist für den Transport auf öffentlichen Straßen und Wegen zu breit, so daß die Sämaschine ein vierreihiges Grundelement umfaßt und einen Klappmechanismus aufweist, mit dem bei der sechsreihigen Sämaschine jeweils das äußere und bei der achtreihigen Sämaschine jeweils die beiden äußeren Sägeräte in eine Transportstellung überführt werden, so daß die zulässige Transportbreite nicht überschritten wird. Die beiden bzw. die vier äußeren Sägeräte sind düngervorratsbehälterfrei und lassen sich durch Hochschwenken in die Transportstellung bringen, wobei sie sich dann oberhalb des zentralen Düngervorratsbehälters befinden. Die Breite des Düngervorratsbehälters entspricht der Breite des vierreihigen Grundelementes der Sämaschine. Jedem einzelnen Sägerät ist ein Düngersäschar zugeordnet. Die Düngersäschare, welche dem vierreihigen Grundelement zugeordnet sind, sind über fest installierte Schlauchleitungen mit dem Düngervorratsbehälter verbunden und die Düngemittel werden durch Schwerkraftförderung diesen Düngersäsachren in einstellbaren Mengen zugeführt.

Um das ständige An- und Abmontieren von Schlauchleitungen für die den äußeren, einklappbaren Sägeräten zugeordneten Düngersäscharen zu vermeiden, wenn diese mittels Hydraulikzylinder in ihre Transport- bzw. Betriebsstellung geschwenkt werden, ist eine Düngemittelzuführvorrichtung angeordnet, mit der die äußeren Sägeräte beim Abschwenken in ihre Betriebsstellung selbsttätig in Kopplung treten. Dazu ist an den äußeren Sägeräten jeweils ein Düngemittel-Fülltrichter angeordnet, der beim Abschwenken der äußeren Sägeräte in die Betriebsstellung unter eine, am Grundelement der Einzelkornsämaschine ausgebildete Düngemittelöffnung bewegt wird. Die Düngemittelöffnung wird mittels einer Förderschnecke von dem Düngervorratsbehälter mit Düngemitteln beschickt. Die aus der Düngemittelöffnung austretenden Düngemittel fallen unter Wirkung der Schwerkraft in den Düngemittel-Fülltrichter und werden dann über Schlauchleitungen den einzelnen, äußeren Düngersäscharen zugeführt. Der Antrieb der Förderschnecke für die Beschickung der Düngemittelöffnung erfolgt über den notwendiger Weise vorhandenen Bodenantrieb der Einzelkornsämaschine.

Dadurch, daß der Antrieb der Förderschnecke für die Beschickung der Düngemittelöffnung, über welche die aus dem Düngervorratsbehälter herausrieselnden Düngemittel den äußeren Düngersäscharen zudosiert werden, vom Bodenantrieb der Einzelkornsämaschine erfolgt, werden dieser Düngemittelöffnung auch Düngemittel von der Förderschnecke zugeführt, wenn die äußeren Sägeräte in die Transportstellung geklappt sind und nur noch mit den Sägeräten des Grundelementes Saatgut und Dünger ausgebracht wird. Der Antrieb für die Förderschnecke wird also nicht unterbrochen bzw. ausgeschaltet, so daß fälschlicher Weise Düngemittel aus den Düngemittelöffnungen ausgetragen werden.

Der Erfindung liegt die Aufgabe zugrunde, auf einfachste Weise die Arbeitsbreiten der eingangs beschrieben Verteilmaschine reduzieren zu können.

Diese Aufgabe wird in erfindungsgemäßer Weise dadurch gelöst, daß beim Einklappen der außerhalb der Transportbreite angeordneten Düngerausbringelemente gleichzeitig die Düngerzuführung zu diesen Düngerausbringelementen unterbrochen wird, und daß beim Einklappen der außerhalb der Transportbreite angeordneten Sägeräte der Antrieb dieser Aggregate ebenfalls unterbrochen wird.

Infolge dieser Maßnahme läßt sich die Arbeitsbreite einer sechs-, acht-, oder mehrreihigen Verteilmaschine, welche beispielsweise aus einem vierreihigen Grundelement besteht, durch das Überführen der äußeren Sägeräte in die Transportstellung, auf einfachste Weise reduzieren, ohne daß fälschlicher Weise Saatgut und Düngemittel gefördert wird. Hierbei ist dann erfindungsgemäß vorgesehen, daß die Düngerzuführung automatisch beim Einklappen der Düngerausbringelemente unterbrochen wird.

Eine weitere Möglichkeit zur Unterbrechung der Düngerzufuhr der äußeren Düngerausbringelemente besteht darin, daß der Antrieb der Dosierelemente für die Düngerzuführung zu den Düngerausbringelementen unterbrochen wird.

Eine weitere Möglichkeit zur Verhinderung einer unsachgemäßen Förderung von Düngemitteln bei reduzierter Arbeitsbreite besteht in erfindungsgemäßer Weise dadurch, daß die Düngerzuführung unterbrochen bzw. die geförderten Düngemittel in den Vorratsbehälter umgeleitet werden.

In einer weiteren Ausführungsform ist erfindungsgemäß vorgesehen, daß an der Maschine beidseitig Spuranreißer angeordnet sind, daß der Einklappmechanismus der Spuranreißer mit den einklappbaren bzw. abschaltbaren Düngersäscharen gekoppelt ist, so daß gleichzeitig beim Unterbrechen der Düngerzufuhr Spuranreißer eingeklappt werden.

Weitere Einzelheiten der Erfindung sind der Beispielsbeschreibung und den Zeichnungen zu entnehmen. Hierbei zeigt

Fig. 1 die in erfindungsgemäßer Weise ausgebildete kombinierte landwirtschaftliche Verteilmaschine in der Seitansicht und

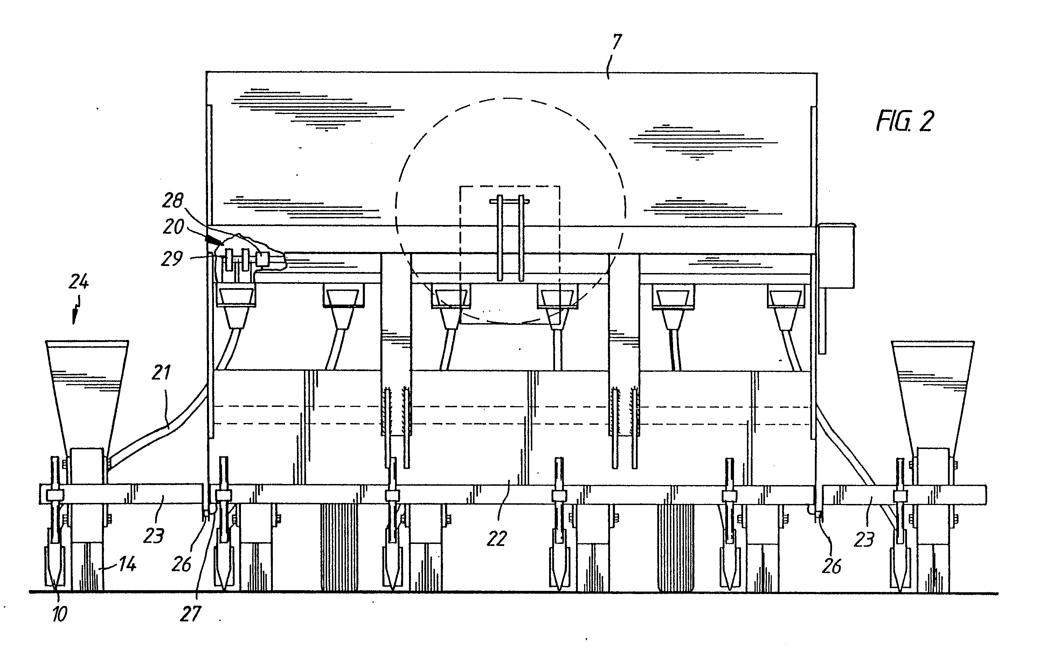

Fig. 2 die Verteilmaschine gemäß Fig. 1 in der Ansicht von vorne und im anderen Maßstab.

Die kombinierte landwirtschaftliche Verteilmaschine besteht aus der Einzelkornsämaschine 1 und dem Düngerstreuer 2. Die pneumatische Einzelkornsämaschine 1 weist die Tragkonstruktion 3 mit den Dreipunktkupplungselementen 4 auf, mit denen die kombinierte landwirtschaftliche Verteilmaschine an den Dreipunktkraftheber 5 des Schleppers 6 angeschlossen wird. In der Tragkonstruktion 3 stützt sich auch der durchgehende zentrale Düngervorratsbehälter 7 ab. Im Bereich der unteren Dreipunktkupplungselemente 4 befindet sich das zentrale Tragrohr 8, an dem über die Halterungen 9 die als Schare ausgebildeten Düngerablegevorrichtungen 10 und die mittels parallelogrammartiger Halterungen 11 angelenkten einzelnen, nebeneinander angeordneten Sägeräte 12 befestigt sind. Die Sägeräte 12 weisen jeweils die Saatgutbehälter 13, das Säschar 14 und das nicht näher dargestellte, bekannte Vereinzelungsorgan und die Druckrolle 15 auf. Die Einzelkornsämaschine 1 mit dem zentralen Düngervorratsbehälter 7 stützt sich über die Laufräder 16 auf der Bodenoberfläche ab. Hinter dem zentralen, durchgehenden Düngemittelbehälter 7 ist das Gebläse 17 plaziert, welches über die Gelenkwelle 18 von der Zapfwelle des Ackerschleppers 6 angetrieben wird. Über die einzelnen Schläuche 19 sind die einzelnen Sägeräte 12 mit dem Gebläse 17 verbunden.

Den einzelnen Düngerablegevorrichtungen 10 werden die sich im zentralen Düngervorratsbehälter 7 befindlichen Düngemittel über die als Nockenräder ausgebildete Dosiervorrichtung 20 den Düngerleitschläuchen 21 zugeführt.

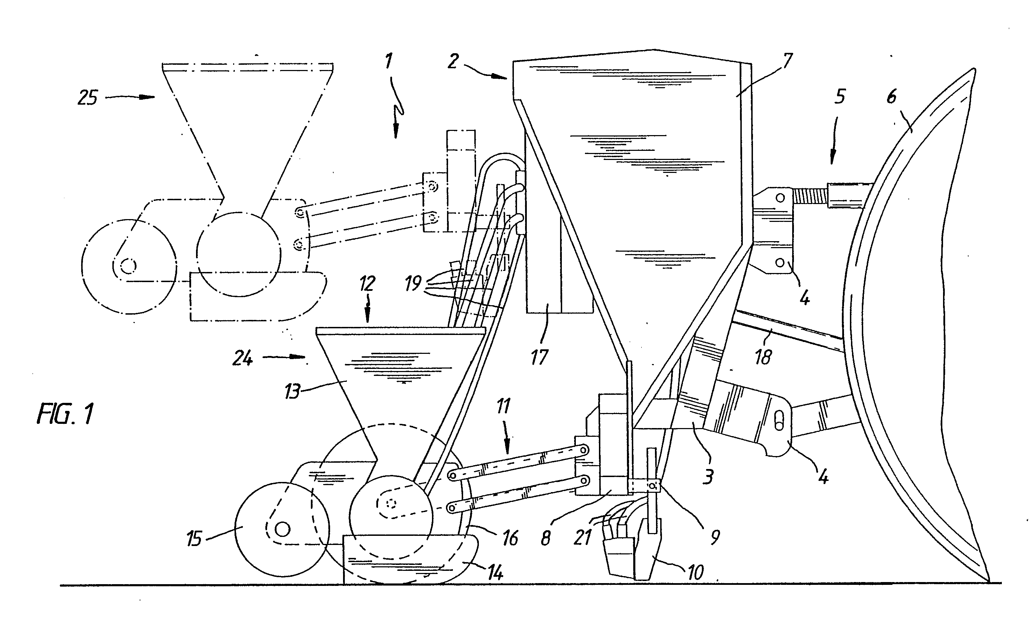

Die an dem zentralen Teil 22 angeordneten Einzelkornsägeräte 12 und der durchgehende Düngervorratsbehälter 7 mit den Düngerabgabevorrichtungen 10 stellen das vierreihige Grundelement dar. An diesem Grundelement schließen sich jeweils die äußeren Ausleger 23 an. An diesen äußeren Auslegern 23 ist jeweils ein Einzelkornsägerät 12 mit einer Düngerablegevorrichtung 10 befestigt, so daß sich eine sechsreihige kombinierte landwirtschaftliche Verteilmaschine ergibt. Da diese sechsreihige kombinierte landwirtschaftliche Verteilmaschine für den Transport auf öffentlichen Straßen und Wegen zu Breit ist, lassen sich die neben dem Grundelement, an den jeweiligen Auslegern 23 angeordneten Einzelkornsägeräte 12 mit der jeweiligen Düngerablegevorrichtung 10 von der mit durchgezogenen Linien wiedergebenen Betriebsstellung 24 gemäß Fig. 1 in die mit strichpunktierten Linien wiedergegebene Außerbetriebsstellung 25 überführen. In dieser Außerbetriebsstellung 25 befinden sich die jeweiligen äußeren Einzelkornsägeräte 12 im Bereich unmittelbar hinter dem zentralen, durchgehenden Düngervorratsbehälter 7 oberhalb der am zentralen Tragrohr 8 angelenkten Einzelkornsägeräte 12.

Sobald nun die jeweiligen äußeren Einzelkornsägeräte 12 von ihrer Betriebsstellung 24 in die Transportstellung 25 überführt werden, wird der Kontakt des Schalters 26 unterbrochen. Dieser Schalter 26 ist über das Kabel 27 mit einer Kupplungsvorrichtung 28 verbunden, welche auf der Dosierwelle 29 jeweils vor der Dosiervorrichtung 20, die den äußeren Düngerablegevorrichtungen 10 zugeordnet ist, angeordnet ist. Ein Unterbrechen des Kontaktes des Schalters 26 führt dazu, daß mittels der Kupplungsvorrichtung 28 der Antrieb für die Dosiervorrichtung 20, die den jeweiligen äußeren Düngerablegevorrichtungen 10 zugeordnet ist, unterbrochen wird. Hierdurch wird gewährleistet, daß den Düngerleitschläuchen 21, der eingeklappten äußeren Einzelkornsägeräte 12 keine Düngemittel mehr zugeführt werden.

## Ansprüche

1. Kombinierte landwirtschaftliche Verteilmaschine, bestehend aus einer Einzelkornsämaschine mit mehreren nebeneinander angeordneten Sägeräten, welche an einem Querbalken befestigt sind, und einem Düngerstreuer mit mehreren Düngerausbringelementen, wobei der Düngerstreuer einen oder mehrere Vorratsbehälter, welche innerhalb der Transportbreite angeordnet sind, und mehrere innerhalb der Transportbreite und zumindest einem außerhalb der Transportbreite angeordnetes Düngerausbringelement aufweist, wobei die außerhalb der Transportbreite angeordneten Sägeräte und Düngerausbringelemente über eine klappbare Vorrichtung zum Transport und/oder zur Reduzierung der Arbeitsbreite in eine Position innerhalb der Transportbreite gebracht werden können, dadurch gekennzeichnet, daß beim Einklappen der außerhalb der Transportbreite angeordneten Düngerausbringelemente (10) gleichzeitig die Düngerzuführung zu diesen Düngerausbringelementen (10) unterbrochen wird, und daß beim Einklappen der außerhalb der Transportbreite angeordneten Sägeräte (12) der Antrieb dieser Aggregate ebenfalls unterbrochen wird.

2. Verteilmaschine nach Anspruch 1, dadurch gekennzeichnet, daß die Düngerzuführung automatisch beim Einklappen der Düngerausbringelemente (10) unterbrochen wird.

3. Verteilmaschine nach Anspruch 1, dadurch gekennzeichnet, daß der Antrieb der Dosierelemente (20) für die Düngerzuführung zu den Düngerausbringelementen (10) unterbrochen wird.

4. Verteilmaschine nach Anspruch 1, dadurch gekennzeichnet, daß die Düngerzuführung unterbrochen bzw. die zu den Ausbringelementen geförderten Düngemittel in den Vorratsbehälter (7) umgeleitet werden.

5. Verteilmaschine nach einem der vorstehenden Ansprüche, dadurch gekennzeichnet, daß an der Maschine beidseitig Spuranreißer angeordnet sind, daß der Einklappmechanismus der Spuranreißer mit den einklappbaren bzw. abschaltbaren Düngerscharen gekoppelt, so daß gleichzeitig beim Unterbrechen der Düngerzufuhr die Spuranreißer eingeklappt werden.

FIG. 1

EP 0 366 972 A2

FIG. 2